# EUROPEAN PATENT SPECIFICATION

(11) **EP 0 910 957 B1**
(45) Date of publication and mention of the grant of the patent: **18.05.2005**
(21) Application number: 98118828.7
(22) Date of filing: 06.10.1998
(51) Int. Cl.: A23L 1/0522, A23L 1/182, A23L 1/39, A23L 1/01

(54) **Starch-based water-binding composition for foods**
Bindemittel auf Basis von Stärke für Nahrungsmittel
Composition liante à base d'amidon pour produits alimentaires

(30) Priority: 10.10.1997 DE 19744949
(43) Date of publication of application: 28.04.1999
(73) Proprietor: Bestfoods, Englewood Cliffs, NJ 07632 (US); Bestfoods Deutschland GmbH & Co. OHG, 74074 Heilbronn (DE)
(72) Inventor: Eppler, Wolfgang, 74193 Schwaigern (DE)
(74) Representative: Wurfbain, Gilles L.

(56) References cited:
- EP-A- 0 796 868
- US-A- 4 418 090
- US-A- 5 439 697
- US-A- 5 576 043
- PATENT ABSTRACTS OF JAPAN vol. 013, no. 487 (C-649), 6 November 1989 (1989-11-06) & JP 01 191651 A (ISAO INABE), 1 August 1989 (1989-08-01)

## Description

### Field of the Invention

The invention relates to a water-binding composition for binding the excess liquid after cooking high-carbohydrate, starchy foods, such as rice, potatoes, pasta, cereals, legumes, etc.

### Background of the Invention

High-carbohydrate, starchy foods such as those mentioned above are customarily cooked in water or aqueous liquids such as stocks, meat juices, milk etc. During cooking, such foods absorb water and, at the same time, water-binding substances escape from the foods into the liquid and give the cooked dishes a typical sensory character. A typical dish of this type is risotto.

Setting the amount of water is problematic. A minimum amount of water is necessary to achieve the desired hydration of the foods. In order to ensure sufficient hydration, an excess of water is generally used. When foods of this type are cooked, swelling and thus an increase in viscosity occur to a greater or lesser extent, for this reason, sufficient excess liquid is used so that the mixture remains stirrable and does not burn on during cooking. On the other hand, an excess of liquid which is too high is not wanted in the end product and this must either be reduced by boiling away, which can lead to an overhydration of the food, or it must be poured off, which leads to a loss of valuable constituents, or it must be bound by adding water-binding substances which are generally starchy. However, this produces a binding which is frequently atypical of the product and an unsatisfactory sensory character, so that because of this difficulty of removing the excess liquid, setting the required amount of water accurately is a measure which, although impossible in practice, may be a necessary aim. The greater the portion sizes, the more difficult it becomes to determine the required amount of liquid in advance and the preparation of large portions is virtually impossible in this way.

The preparation of such dishes would be considerably simplified if cooking could be carried out with an excess of liquid and the excess liquid could then be bound in such a manner that the structure and consistency of the dish known from traditional cooking are retained. There is therefore a demand for a water-binding composition by means of which the excess liquid after boiling such foods can be bound.

It is therefore an object of the present invention to provide a water-binding composition by means of which the excess liquid after boiling such foods can be bound.

Other objects of the present invention will become apparent with reference to the specification.

US 5,576,043 discloses a low-fat alternative to conventional shortenings, and in particular a composition suitable as a roll-in fat substitute for baked goods. The compositions disclosed contain a mixture of:
- 1-10% pregelatinised unmodified starch
- 5-15% pregelatinised chemically modified high amylopectin starch
- 5-10% emulsifier
- balance water.

US 5,439,697 relates to low fat spreadable compositions suitable as frosting on baked goods. The compositions contain a mixture of:
- 30-90% sweetener
- 1-9% shortening
- 0.75-10% starch (mixture of hydrophilic and hydrophobic starch)
- 0.05-1.5% hydrocolloid
- 0.25-3% emulsifier
- 9-27% water.

US 4,418,090 relates to commercially prepared dry food products containing a thickening agent, which thickening agent is a physically modified starch. The starch is obtained by subjecting starch to a heating step at a specific moisture content, cooling and drying.

JP 01191651 discloses a method for preparing rice products suitable for forming, by cooking a rice with a binder such as com starch, rice flour, wheat flour (i.e. no further identification, so natural or unmodified starches.

EP 796868 relates to compositions for thickening foodstuffs. Said compositions are highly effective starches, allowing a limited use (page 2, lines 49-51). Said highly effective starches are crosslinked (i.e. chemically modified) starches.

### SUMMARY OF THE INVENTION

The present invention discloses a water-binding composition for binding excess liquid after cooking high-carbohydrate, starchy foods, such as rice, potatoes, pasta, cereals, legumes etc., comprising (a) 20-60% by weight of a physically modified starch, (b) 35-65% by weight of a chemically modified starch and (c) 2-15% by weight of a dried edible fat emulsion. The physically modified starch is a foamed pregelatinized starch product produced by the process of German Patent 32 06 751, which corresponds to European Patent 87847, entitled "A Process for Preparing Foamed Gelatinized Starch Products." The chemically modified starch is a chemically modified potato starch of the starch diphosphate type. The dried edible fat emulsion is a fat powder produced from a fat emulsion together with a carrier. The components are present in a ratio of a:b:c = (1.5-7): (3-9):1. The water-binding composition may further include taste-influencing additives selected from the group consisting of salt, spices, citric acid, tomato powder, onion powder, and flavourings. A process of binding the excess liquid after cooking high-carbohydrate, starchy foods comprising a step of using a water-binding composition according to the present invention is also disclosed.

### DETAILED DESCRIPTION OF THE INVENTION

To achieve this object, the invention discloses a water-binding composition consisting of a combination of
a) 20-60% by weight of a physically modified starch
b) 35-65% by weight of a chemically modified starch and
c) 2-15% by weight of a dried edible fat emulsion.

According to a particularly preferred embodiment, the components are in a weight ratio to one another of a:b:c = (1.5-7):(3-9):1.

The physically modified starch (a) is preferably a foamed gelatinized starch product, as is obtained by the process of German Patent 32 06 751. According to this process, a granular or pulverized starch is heated in an extruder press to temperatures of 60-220°C in the presence of 10-30% by weight of water and a gas-forming blowing agent, and extruded. In this process, the starch material is heated in the extruder press by the pressure, the reaction mixture being brought to the desired temperature, if appropriate, by supplying external heat and, on exit from the extruder die of the starch which is being gelatinized by the heat in the presence of the available water, expansion and foam formation with simultaneous solidification of the gelatinized starch mixture then occurs due to the gas development in the reaction of the blowing agent additives. The foam starch extrudate exiting from the die is comminuted after cooling and if appropriate is pulverized.

A physically modified starch prepared in this manner which is preferred for the use according to the invention is the starch product Aero-Myl from Südstärke. Aero-Myl is a bulky starch product having a bulk density of about 100 g/l which has a high absorption capacity for hydrophobic substances. It produces solutions of low viscosity in water and is recommended as a stabiliser for instant preparations such as soups, sauces, infant foods, etc.

Other physically modified starches produced by pregelatinization with subsequent spray-drying can also be used.

Starches suitable as chemically modified starch (b) for the purposes of the present invention are, for example, distarch phosphate, acetylated distarch phosphate, hydroxypropyl distarch phosphate etc., in particular a chemically modified potato starch, for example one of the starch diphosphate type, in particular one having a maximum phosphate content of 0.14%. A commercial product of this type is the product Perfectamyl 1412 from AVEBE, which has a Rheomat value of 594 Pas and a Brabender value of 2700 BU in the viscosity maximum. Other products are the Selectamyl products, e.g. 1442 from AVEBE, which represent potato starches, the product Farinex from AVEBE, which is a tapioca starch and the product Remygel 1414 from Remy, which is a waxy rice starch.

Another chemically modified starch suitable for the present invention is the product, which is recommended as a binder and thickener in sauces, milk deserts and soups, C cream 06719 preparation from Cerestar. This chemically modified starch is a hydroxypropylated distarch phosphate, produced by chemical modification of waxy maize starch.

As edible fat emulsion, in principle all conventional fat powders can be used. However, the composition of the fat powder comprising animal or vegetable proteins, phosphates, carriers, vegetable oils and fats, is important for the later properties of the water-binding composition according to the invention. Therefore, in the selection of the fat powder, attention must be paid to whether the prepared dish is in the neutral or acidic pH range.

The water-binding composition according to the invention can further contain taste-influencing additives such as, in particular, salt and spices, and also citric acid, tomato powder, onion powder, flavourings, etc. Since some of these additives themselves influence the viscosity, they can influence the dosage of the water-binding composition.

The percentages given for the obligatory constituents a, b and c of the water-binding composition according to the invention are based on a mixture of only these three constituents.

Generally, the water-binding composition is used in an amount of 4-10% by weight, preferably 6-9% by weight, based on the amount of water used. Although some of the water is required for swelling the rice grains and therefore does not need to be bound at the end of cooking, for reasons of practicality it is expedient to base the dosage of the water-binding composition on the total amount of water used, when a conventional liquid excess is used.

The water-binding composition according to the invention is distinguished by an outstanding flowability and fat absorption capacity and has better hot dispersability than known binders, and a risotto prepared using it has an improved transparency.

The invention is described in more detail by the following examples, which are not meant to be limiting in any way. The percentages in the examples are by weight.

### Example 1

500 g of pre-cooked parboiled rice are added to 500 ml of boiling water, brought back to the boil and removed from the cooker.

Adjacent to the cooking position, the hot mixture is admixed with 62 g of a water-binding composition consisting of the following components:
20 g of Aero-Myl
18 g of Perfectamyl
3 g of fat powder
21 g of a mixture of salt, onion powder and flavourings.

In this manner a rice dish is obtained having the typical properties of a classically prepared risotto, such as a light-creamy consistency, milky transparency and a spicy taste.

### Example 2:

A mixture of rice and water, as described in Example 1, is admixed with 80 g of a water-binding composition consisting of the following components:
10 g of Aero-Myl
22 g of Perfectamyl
5 g of fat powder
43 g of a mixture of salt, spices, tomato powder, onion powder and dried tomato pieces.

After this has been stirred in, a rice dish is obtained having the above-described properties of a risotto and a fruity tomato flavour.

### Example 3

A mixture of rice and water, as described in Example 1, is admixed with 105 g of a water-binding composition consisting of the following components:
20 g of Aero-Myl
20 g of Perfectamyl
3 g of fat powder
62 g of a mixture of salt, spices, pea powder and onion powder.

This produces a risotto having the above-described properties and a strong pea flavour.

### Example 4

500 g of pre-cooked rice are added to 500 ml of boiling water, brought back to the boil and removed from the cooker.

This mixture is admixed with a mix of:
20 g of Aero-Myl
20 g of Perfectamyl and
3 g of fat powder
and this is stirred in.

The dish has the properties typical of a risotto.

### Comparison Example A

A mixture of rice and water, as described in Example 4, is admixed with a mix of:
20 g of Perfectamyl and
3 g of fat powder
and this is stirred in.

Although the dish has binding and whiteness, the sensory impression of cooked starch is absent.

### Comparison Example B

A mixture of rice and water, as described in Example 4, is admixed with a mix of:
20 g of Aero-Myl and
20 g of Perfectamyl
and this is stirred in.

Although the mixture has binding and has the sensory character of cooked starch, the whitish appearance is absent.

### Comparison Example C

A mixture of rice and water, as described in Example 4, is admixed with a mix of:
20 g of Aero-Myl
3 g of fat powder
and this is stirred in.

The mixture has no binding whatsoever.

While the invention has been described with reference to preferred embodiments thereof, as will be apparent to those skilled in the art, certain changes and modifications can be made without departing from the scope of the invention as defined by the following claims.

## Claims

1. A water-binding composition for binding excess liquid after cooking high-carbohydrate, starchy foods comprising:
a) 20-60% by weight of a physically modified starch,
b) 35-65% by weight of a chemically modified starch, and
c) 2-15% by weight of a dried edible fat emulsion.

2. The water-binding composition according to Claim 1, wherein said physically modified starch is a foamed pregelatinized starch product produced by the process of German Patent 32 06 751.

3. The water-binding composition according to Claim 1, wherein said chemically modified starch is a chemically modified potato starch of the starch diphosphate type.

4. The water-binding composition according to claim 1, wherein said dried edible fat emulsion is a fat powder produced from a fat emulsion together with a carrier.

5. The water-binding composition according to claim 1, wherein said components are present in a ratio of a:b:c = (1.5-7): (3-9):1.

6. The water-binding composition according to claim 1, further comprising taste-influencing additives selected from the group consisting of salt, spices, citric acid, tomato powder, onion powder, and flavourings.

7. A process of binding the excess liquid after cooking high-carbohydrate, starchy foods comprising a step of using a water-binding composition according to Claim 1 in an amount of 4-10% by weight based on the amount of water used.

8. A process according to claim 7, wherein the amount of the water-binding composition according to Claim 1 is 6-9% by weight based on the amount of water used.

9. The water-binding composition according to claim 1, wherein said starchy foods are selected from the group consisting of rice, potatoes, pasta, cereals, and legumes.

10. Use of a composition as in claim 1-6, for binding excess liquid after cooking high-carbohydrate, starchy foods.

11. Use according to claim 10, wherein the high-carbohydrate, starchy foods comprise rice, potatoes, pasta, cereals, or legumes.

## Patentansprüche

1. Wasserbindende Zusammensetzung zum Binden von überschüssiger Flüssigkeit nach dem Kochen von stärkehaltigen Nahrungsmitteln mit hohem Kohlenhydrat-Gehalt, umfassend:
a) 20 - 60 Gew.-% einer physikalisch modifizierten Stärke,
b) 35 - 65 Gew.-% einer chemisch modifizierten Stärke und
c) 2 - 15 Gew.-% einer getrockneten Speisefettemul-sion.

2. Wasserbindende Zusammensetzung nach Anspruch 1, wobei die physikalisch modifizierte Stärke ein geschäumtes, prägelatinisiertes Stärkeprodukt ist, das durch das Verfahren gemäß dem deutschen Patent 32 06 751 hergestellt wird.

3. Wasserbindende Zusammensetzung nach Anspruch 1, wobei die chemisch modifizierte Stärke eine chemisch modifizierte Kartoffelstärke vom Stärke-Diphosphat-Typ ist.

4. Wasserbindende Zusammensetzung nach Anspruch 1, wobei die getrocknete Speisefettemulsion ein Fettpulver ist, das aus einer Fettemulsion zusammen mit einem Träger hergestellt wird.

5. Wasserbindende Zusammensetzung nach Anspruch 1, wobei die Komponenten in einem Verhältnis von a : b : c = (1,5-7) : (3-9) : 1 vorliegen.

6. Wasserbindende Zusammensetzung nach Anspruch 1, die weiter geschmacksbeeinflussende Zusatzstoffe umfasst, die aus der Gruppe, bestehend aus Salz, Gewürzen, Zitronensäure, Tomatenpulver, Zwiebelpulver und Aromastoffen, ausgewählt sind.

7. Verfahren zum Binden der überschüssigen Flüssigkeit nach dem Kochen von stärkehaltigen Nahrungsmitteln mit hohem Kohlenhydrat-Gehalt, umfassend einen Schritt der Verwendung einer wasserbindenden Zusammensetzung nach Anspruch 1 in einer Menge von 4-10 Gew.-%, bezogen auf die Menge des verwendeten Wassers.

8. Verfahren nach Anspruch 7, wobei die Menge der wasserbindenden Zusammensetzung nach Anspruch 1 6-9 Gew.-%, bezogen auf die verwendete Wassermenge, beträgt.

9. Wasserbindende Zusammensetzung nach Anspruch 1, wobei die stärkehaltigen Nahrungsmitteln aus der Gruppe, bestehend aus Reis, Kartoffeln, Teigwaren, Cerealien und Hülsenfrüchten, ausgewählt sind.

10. Verwendung einer Zusammensetzung wie in Anspruch 1 bis 6 zum Binden überschüssiger Flüssigkeit nach dem Kochen von stärkehaltigen Nahrungsmitteln mit hohem Kohlenhydrat-Gehalt.

11. Verwendung nach Anspruch 10, wobei die stärkehaltigen Nahrungsmittel mit hohem Kohlenhydrat-Gehalt Reis, Kartoffeln, Teigwaren, Cerealien oder Hülsenfrüchte umfassen.

## Revendications

1. Composition de liaison à l'eau pour lier un liquide en excès après cuisson d'aliments amylacés à haute teneur en glucide, comprenant :
a) 20 à 60 % en poids d'un amidon physiquement modifié,
b) 35 à 65 % en poids d'un amidon chimiquement modifié, et
c) 2 à 15 % en poids d'une émulsion de matières grasses comestibles séchée.

2. Composition de liaison à l'eau selon la revendication 1, dans laquelle ledit amidon physiquement modifié est un produit d'amidon prégélatinisé sous forme de mousse produit par le procédé du brevet allemand 32 06 751.

3. Composition de liaison à l'eau selon la revendication 1, dans laquelle ledit amidon chimiquement modifié est un amidon de pomme de terre chimiquement modifié du type diphosphate d'amidon.

4. Composition de liaison à l'eau selon la revendication 1, dans laquelle ladite émulsion de matières grasses comestibles séchée est une poudre de matières grasses produite à partir d'une émulsion de matières grasses conjointement avec un véhicule.

5. Composition de liaison à l'eau selon la revendication 1, dans laquelle lesdits composants sont présents en un rapport de a : b : c = (1,5 à 7) : (3 à 9) : 1.

6. Composition de liaison à l'eau selon la revendication 1, comprenant en outre des additifs influençant le goût choisis dans le groupe consistant en le sel, les épices, l'acide citrique, la poudre de tomate, la poudre d'oignon et les arômes.

7. Procédé de liaison du liquide en excès après cuisson d'aliments amylacés à haute teneur en glucide comprenant une étape d'utilisation d'une composition de liaison à l'eau selon la revendication 1 en une quantité de 4 à 10 % en poids sur la base de la quantité d'eau utilisée.

8. Procédé selon la revendication 7, dans lequel la quantité de la composition de liaison à l'eau selon la revendication 1 vaut de 6 à 9 % en poids sur la base de la quantité d'eau utilisée.

9. Composition de liaison à l'eau selon la revendication 1, dans laquelle lesdits aliments amylacés sont choisis dans le groupe consistant en le riz, les pommes de terre, les pâtes, les céréales et les légumes.

10. Utilisation d'une composition selon l'une quelconque des revendications 1 à 6, pour lier un liquide en excès après cuisson d'aliments amylacés à haute teneur en glucide.

11. Utilisation selon la revendication 10, dans laquelle les aliments amylacés à haute teneur en glucide comprennent le riz, les pommes de terre, les pâtes, les céréales ou les légumes.
